# EUROPÄISCHE PATENTSCHRIFT

(11) **EP 3 815 221 B1**
(45) Veröffentlichungstag und Bekanntmachung des Hinweises auf die Patenterteilung: **15.10.2025**
(21) Anmeldenummer: 19731139.2
(22) Anmeldetag: 03.06.2019
(51) Int. Cl.: H01F 27/10, H01F 27/32

(54) **AKTIV GEKÜHLTE SPULE**
ACTIVELY COOLED COIL
BOBINE À REFROIDISSEMENT ACTIF

(30) Priorität: 28.06.2018 DE 102018115654
(43) Veröffentlichungstag der Anmeldung: 05.05.2021
(73) Patentinhaber: Schaeffler Technologies AG & Co. KG, 91074 Herzogenaurach (DE)
(72) Erfinder: KEGELER, Jörg, 98553 Schleusingen (DE)
(86) Internationale Anmeldenummer: PCT/DE2019/100487
(87) Internationale Veröffentlichungsnummer: WO 2020/001682

(56) Entgegenhaltungen:
- DE-A1- 102013 100 622
- DE-A1- 102015 206 697
- DE-A1- 102015 211 852
- DE-A1- 102015 222 400
- DE-T5- 112012 002 829
- US-A1- 2002 096 946
- US-A1- 2015 194 258
- "IEC 60664-1 ED3: Insulation coordination for equipment within low-voltage supply systems - Part 1: Principles, requirements and tests (Proposed horizontal standard)", 30 March 2018 (2018-03-30), pages 1 - 76, XP082012814, Retrieved from the Internet <URL:http://www.iec.ch/cgi-bin/restricted/getfile.pl/109_166ea_CD.pdf?dir=109&format=pdf&type=_CD&file=166ea.pdf> [retrieved on 20180330]

## Beschreibung

Die Erfindung betrifft ein Spulensystem umfassend eine erste Spule mit einer Vielzahl übereinander geschichteter Planarspulen. Ferner umfasst die Erfindung ein Verfahren zur Herstellung eines derartigen Spulensystems. Ein solches Spulensystem kann beispielsweise für kompakt- und leichtbauende Elektromotoren eingesetzt werden, wie sie im Bereich der Servoantriebe benötigt werden. Hierbei kann es sich um Linearmotoren wie auch rotative Motoren handeln.

Der Begriffe der Planarspule erfasst im Allgemeinen eine Wicklung, die sich lediglich in einer Ebene erstreckt. Mehrere vertikal übereinander liegende Planarspulen können elektrisch miteinander verbunden werden, sodass sie eine Art Zylinderspule ausbilden. Als Synonym für den Begriff Planarspule wird im Folgenden auch der Begriff Flachspule verwendet.

Ein Spulensystem mit einer Spule, die aus einer Vielzahl von Planarspulen besteht, die schichtartig übereinander angeordnet werden, ist beispielsweise aus der DE102008062575A1 bekannt. Das in dieser Schrift offenbarte Spulensystem ist in Form einer Multilayer-Platine realisiert und bildet das Primärteil eines Linearmotors. Die verschiedenen Layer dieser Multilayer-Platine sind größtenteils mit bestrombaren Wicklungen ausgefüllt. Die schichtweise übereinanderliegenden Windungen sind vertikal elektrisch mit sogenannten Vias verbunden und bilden so jeweils eine Solenoidspule einer Phase des Linearmotors. Auf diese Art und Weise lässt sich ein besonders leichtes und kompaktes Primärteil für einen Linearmotor realisieren, das sich im besonderen Maße als Läufer für hochdynamische Anwendungen eignet.

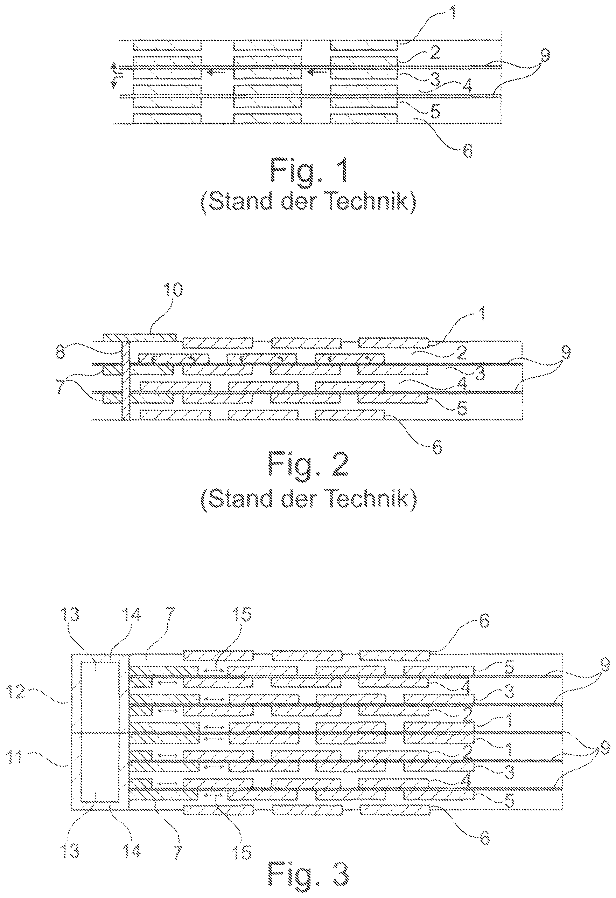

Figur 1 zeigt in einem Querschnitt lotrecht zur Oberfläche eine Multilayer-Platine einer aus dem Stand der Technik bekannte Anordnung von Planarspulen 1 - 6, die schichtweise aufeinander gestapelt sind und zu einer Art Solenoidspule verschaltet sind. In jeder Ebene dieser Multilayer-Platine befindet sich hier beispielhaft eine Planarspule 1-6 mit jeweils drei Windungen. Die Windungen verlaufen entweder von innen nach außen oder von außen nach innen. Beispielsweise ist die Wicklung einer ersten Planarspule 1 von außen nach innen gewickelt und über ein elektrisches Via mit einer darunterliegenden zweiten Wicklung einer zweiten Planarspule 2 elektrisch verbunden. Diese zweite Planarspule 2 wiederum ist von innen nach außen gewickelt und ihrerseits wiederum über ein hier nicht dargestelltes weiteres elektrisches Via mit einer dritten Planarspule 3 in der dritten Ebene der dargestellten Multilayer-Platine verbunden. Auf diese Art und Weise wird eine Zylinderspule bzw. ein Solenoid geschaffen, der sich über sechs Ebenen der Multilayer-Platine erstreckt.

Die Multilayer-Platinen-Technologie eignet sich in besonderem Maße dazu, Anwendungen mit hoher elektrischer Leistung in kompakter und leichter Bauform zu realisieren. Ein Beispiel hierfür ist das bereits erwähnte Primärteil des Linearmotors aus DE102008062575A1, das als mehrschichtige Leiterplatine realisiert ist. Aufgrund der hohen Ströme in derartigen Anwendungen ist hierbei die Entwärmung eine besondere Herausforderung. Je höher die Energiedichte der Multilayer-Platine ist, desto kompakter kann die Bauform realisiert werden, desto größer sind jedoch auch die Anforderungen an die Entwärmung der Multilayer-Platine. Wie in Figur 1 zu erkennen ist, muss zur Entwärmung der Multilayer-Platine die in einer inneren Windung einer Planarspule entstehende Wärme lateral zum äußeren Rand der Multilayer-Platine abgeführt werden, wo sie anschließend zur Oberfläche der Platine geführt werden kann. Zwischen den einzelnen Windungen jeder Planarspule ist ein Isolationsabstand erforderlich, der aus technologischen Gründen in der Größenordnung von einigen Hundert Mikrometern liegen muss. Weder das Platinenmaterial aus faserverstärktem Kunststoff noch die üblicherweise zur Isolation der verschiedenen Schichten verwendeten PrePreg-Schichten besitzen einen guten thermischen Leitwert. Dementsprechend stellt der laterale Wärmetransport innerhalb eines solchen Platinenstacks eine besondere Herausforderung dar.

Eine verbesserte laterale Wärmeabfuhr bei einem derartigen schichtförmig aufgebauten Spulensystem in Form einer Multilayer-Platine ist in der OE102015222400A1 offenbart. Diese Schrift lehrt ein Spulensystem mit den Merkmalen gemäß Oberbegriff des vorliegenden Patentanspruchs 1 und stellt den nächstliegenden Stand der Technik dar. Schichtweise vertikal übereinanderliegende Flachspulen werden jeweils mit einem lateralen Versatz zueinander angeordnet, sodass in einem Querschnitt lotrecht zur Oberfläche der Multilayer-Platine Leiterbahnabschnitte einer Flachspule stets vertikal in teilweiser Überdeckung mit zwei Leiterbahnabschnitten einer anderen Flachspule angeordnet sind, die sich in vertikaler Nachbarschaft zu der besagten Flachspule befindet.

Durch die teilweise Überlappung wird ermöglicht, dass der laterale Wärmetransport schichtübergreifend stattfinden kann. Das heißt, dass die in einem Leiterbahnabschnitt erzeugte Wärme die Möglichkeit hat, lateral den Randbereich zu erreichen, indem sie auf einen vertikal benachbarten Leiterbahnabschnitt einer anderen Planarspule übergeht, die jedoch einen lateralen Versatz aufweist. Eine solche schindelartige Struktur, die den schichtübergreifenden lateralen Wärmetransport ermöglicht, ist in Figur 2 veranschaulicht. Die Pfeile verdeutlichen, wie der Wärmetransport von einer Planarspule 3 auf eine darüber liegende Planarspule 2 übergeht, die zu der Planarspule 3 einen lateralen Versatz aufweist, also eine Art Verschindelung bewirkt.

Die beiden Planarspulen 2, 3 sind lediglich durch eine sehr dünne PrePreg-Schicht von etwa 50 µm bis 200 µm voneinander beabstandet. Der laterale Abstand zwischen zwei Windungen einer Planarspule einer Ebene ist aus prozesstechnischen Gründen nicht beliebig minimierbar. Lateral ist der Abstand zwischen den Windungen minimal 200 µm. (Diese Abstandsverhältnisse sind in den Figuren nicht maßstabsgerecht dargestellt.)

Eine typische Leiterbahn hat beispielsweise eine laterale Breite von 1 mm, während die Dicke der Leiterbahnen zum Beispiel 100 µm beträgt. Ohne den lateralen Versatz der Leiterbahnen wird der Wärmeleitwert in laterale Richtung durch den Abstand der Windungen in laterale Richtung und die Dicke der Leiterbahnen bestimmt. Durch die Verschindelung ist diesem Wärmeleitwert ein weiterer Leitwert parallelgeschaltet, der einen schichtübergreifenden Wärmetransport in vertikaler Richtung mit einschließt. Der hierfür maßgebliche Wärmewiderstand hängt in erster Linie von dem Abstand der in teilweiser Überdeckung liegenden Windungen vertikal benachbarter Planarspulen ab und dem Anteil der Leiterbahnenbreite, der den Überdeckungsbereich darstellt. Ist beispielsweise sowohl der laterale Abstand der Windungen als auch der vertikale Abstand der übereinanderliegenden Planarspulen 200 µm und erstreckt sich der Bereich einer 1 mm breiten Leiterbahn, der in vertikaler Überdeckung mit einer Leiterbahn einer benachbarten Planarspule liegt, über 400 µm der gesamten Leiterbahnenbreite, so ist der Wärmeleitwert in vertikaler Richtung viermal so groß wie in laterale Richtung, wenn die Dicke der Leiterbahnen 100 µm beträgt. Daraus ergibt sich bei einer verschindelten Anordnung der übereinanderliegenden Planarspulen mehr als eine Vervierfachung des Wärmeleitwertes im Vergleich zu einer Anordnung der Planarspulen in vollständiger Überdeckung, d. h. ohne Verschindelung.

Daher ermöglicht die Verschindelung einen schichtübergreifenden lateralen Wärmetransport mit einem deutlich besseren Wärmeleitwert, da der vertikale Isolationsabstand weniger als einem Fünftel des lateralen Isolationsabstandes zwischen den Windungen entspricht.

DE102015222400A1 offenbart darüber hinaus eine passive Leiterbahnstruktur 7, die kammartig in die äußeren Leiterbahnabschnitte der aufeinander gestapelten und verschindelten Planarspulen 1-6 eingreift. Diese Leiterbahnstruktur 7 ist nicht bestromt. Sie ist von sämtlichen stromführenden Elementen der Multilayer-Platine galvanisch getrennt. Die passive Leiterbahnstruktur 7 hat die Aufgabe, die auf die bereits beschriebene Art und Weise in lateraler Richtung durch die Multilayer-Platine geleitete Wärme vertikal zu einer oder beiden Oberflächen der Multilayer-Platine zu transportieren. Die übereinanderliegenden Leiter der passiven Leiterbahnstruktur 7 sind durch ein sogenanntes thermisches Via 8 miteinander verbunden, um einen Wärmeaustausch zwischen den passiven Leiterbahnen in vertikaler Richtung und damit den Wärmetransport zu der oder den Oberfläche(n) zu ermöglichen. An der oder den Oberfläche(n) kann dann ein Kühlkörper vorgesehen werden, um die Wärme weiter abzuführen.

Der Erfindung liegt die Aufgabe zugrunde, eine weitere Erhöhung der Energiedichte in einem derartigen Spulensystem aus schindelartig übereinander geordneten Planarspulen zu ermöglichen.

Die Lösung dieser Aufgabe gelingt durch ein Spulensystem mit den Merkmalen gemäß Patentanspruch 1. Ferner wird die Aufgabe durch ein Verfahren mit den Merkmalen gemäß Patentanspruch 16 gelöst.

Vorteilhafte Ausführungsformen der Erfindung sind den abhängigen Patentansprüchen zu entnehmen.

Das erfindungsgemäße Spulensystem umfasst eine erste Spule mit einer Vielzahl übereinander geschichteter Planarspulen. Zur Verbesserung des lateralen Wärmetransportes ist die eingangs beschriebene, aus dem Stand der Technik bekannte Verschindelung vorgesehen. Unter dem Begriff Verschindelung wird in diesem Zusammenhang eine Anordnung verstanden, bei der jeweils zwei unmittelbar übereinanderliegende Planarspulen derart mit einem lateralen Versatz vertikal aufeinander geschichtet sind, dass zumindest abschnittsweise jeweils eine Windung einer Planarspule und zwei Windungen einer unmittelbar über der ersten Planarspule angeordneten zweiten Planarspule in teilweiser Überdeckung angeordnet sind. Ein Leiterbahnabschnitt einer Planarspule ist demnach teilweise von Leiterbahnabschnitten zweier Windungen einer darüberliegenden Planarspule überdeckt. Ausnahme hierfür bilden naturgemäß die oberste der insbesondere spiralförmig verlaufenden, übereinander geschichteten Planarspulen sowie die jeweils äußeren Windungen der Planarspulen. Die erfindungsgemäße Verschindelung der Leiterbahnen der Spulen erlaubt auch einzelne Leiterbahnabschnitte - beispielsweise Zuleitungsabschnitte - die nicht in teilweiser vertikaler Überdeckung mit zwei Leiterbahnabschnitten einer vertikal benachbarten Spule liegen. Der Großteil der einer Spule zugehörigen Leiterbahn genügt jedoch dem oben beschriebenen Verschindelungsprinzip und ermöglicht so den lateralen Wärmetransport bei vergleichsweise geringem thermischen Widerstand durch einen schichtübergreifenden Wärmetransport.

Der laterale Versatz der übereinanderliegenden Planarspulen hat zur Folge, dass die erste Spule im Bereich der äußersten Windungen eine Art kammartige Struktur aufweist. Diese Kammstruktur entsteht durch den vertikalen Versatz jeweils zweier übereinanderliegender äußerer Windungen.

Das erfindungsgemäße Spulensystem umfasst darüber hinaus eine von allen stromführenden Wicklungen des Spulensystems galvanisch getrennte passive Leiterbahnstruktur. Auch diese passive Leiterbahnstruktur umfasst eine Vielzahl aufeinander geschichteter Leiterbahnen. Diese Leiterbahnen sind derart aufeinander geschichtet, dass sie ebenfalls eine kammartige Struktur bilden. Die erste kammartige Struktur der passiven Leiterbahnstruktur greift in die zweite kammartige Struktur ein, die durch die äußeren Windungen der übereinanderliegenden Wicklungen gebildet wird. Galvanisch sind die beiden kammartigen Strukturen voneinander getrennt. Die erste kammartige Struktur ist also elektrisch von der zweiten kammartigen Struktur isoliert.

Der erfinderische Gedanke beruht nun darauf, eine Basisisolation der stromführenden, spiralförmig verlaufenden, übereinander geschichteten Wicklungen von der passiven Leiterbahnstruktur zu realisieren. Es ist insbesondere keine weitere Isolation der passiven Leiterbahnstrukur notwendig, um den Anforderungen der Basisisolation entsprechend der DIN EN 60664-1 zu genügen. Unter einer Basisisolation ist im Einklang mit der zitierten DIN EN 60664-1 im Rahmen dieser Schrift eine Isolierung zum grundlegenden Schutz von unter gefährlichen Spannungen stehenden Teilen zu verstehen. Die Basisisolation ist somit maßgeblich für den direkten Berührschutz und unterscheidet sich von einer Funktionsisolation. Die Funktionsisolation stellt lediglich eine Isolierung zwischen leitenden Teilen sicher, die nur für die bestimmungsgemäße Funktion des Betriebsmittels notwendig sind.

Hierzu muss der laterale Abstand der äußeren Windung jeder Wicklung zur passiven Leiterbahnstruktur ausreichend groß gewählt werden. Beispielweise ist ein lateraler Abstand von mindestens 1,2 mm erforderlich, um einer Prüfspannung von 4 kV standzuhalten. Mit derartigen Prüfspannungen werden z.B. Leiterplattenmotoren getestet, die für eine dreiphasige eingangsseitige Versorgungsspannung von 400 V ausgelegt sind. Hierbei ergeben sich beispielsweise bei einer Einspeisung über übliche B6-Brückenschaltungen mit Spannungszwischenkreis Zwischenkreisspannungen von 730 V. In vertikaler Richtung wird hingegen für diesen Spannungsbereich nur eine 200 µm starke PrePreg-Schicht zwischen den ineinandergreifenden Leiterbahnen der passiven Leiterbahnstruktur und der äußeren Windungen der Spule benötigt, um Basisschutz der passiven Leiterbahnstruktur zu gewährleisten.

Dadurch, dass die passive Leiterbahnstruktur dennoch in teilweiser vertikaler Überdeckung mit den äußeren Windungen der übereinanderliegenden Planarspulen steht, kann die Wärme dennoch von den stromführenden Wicklungen auf die passive Leiterbahnstruktur übergehen. Wie oben ausgeführt reicht in vertikaler Richtung schon beispielsweise eine dünne, isolierende PrePreg-Schicht zwischen den kammartig ineinandergreifenden Elementen der passiven Leiterbahnstruktur und den äußeren Windungen, um eine Basisisolation zu gewährleisten. Dieser geringe Isolationsabstand ermöglicht einen guten Wärmeübergang von der ersten Spule auf die passive Leiterbahnstruktur.

Kritischer ist, wie oben ausgeführt, der Isolationsabstand hingegen in lateraler Richtung. Dieser kann ausreichend groß gewählt werden, ohne den Wärmeübergang zur passiven Leiterbahnstruktur signifikant zu verschlechtern. Beispielsweise kann der laterale Isolationsabstand der passiven Leiterbahnstruktur gegenüber den äußeren Windungen der ersten Spule so gewählt werden, dass er an keiner Stelle geringer als das 6-fache, insbesondere sogar das 10-fache, des vertikalen Abstandes der unmittelbar übereinanderliegenden Planarspulen ist. Auf diese Art und Weise wird im Randbereich des Spulensystems eine Basisisolation mittels der passiven Leiterbahnstruktur erzielt, die in hervorragender Art und Weise thermisch an die stromführende Spule angebunden ist. Dennoch kann die passive Leiterbahnstruktur von den spannungsführenden Elementen basisisoliert sein und mithin auch insbesondere berührt werden. Durch eine ausreichende Überdeckung in vertikaler Richtung zwischen den Leitern der passiven Leiterbahnstruktur und den äußeren Windungen der Planarspulen verliert der Wärmewiderstand für den Wärmetransport innerhalb einer Ebene, der maßgeblich durch den lateralen Abstand der passiven Leiterbahnenstruktur von den äußeren Windungen der Planarspulen bestimmt wird und zur Sicherstellung der Basisisolation verhältnismäßig groß sein muss, an Bedeutung. Der Wärmetransport findet primär schichtübergreifend statt, da zum einen ein deutlich geringerer Isolationsabstand vertikal zu überwinden ist, zum anderen aber auch durch ausreichende Überdeckung der Leiterbahnen innerhalb der kammartige Struktur eine größerer Fläche für den Wärmetransport durch die Isolationsschicht zur Verfügung steht.

Die Entwärmung des Spulensystems wird dadurch weiter verbessert, dass das Spulensystem einen Kühlkanal für ein flüssiges Kühlmedium umfasst. Dieses flüssige Kühlmedium kann dadurch besonders nahe an die stromführende erste Spule herangeführt werden, dass der Kühlkanal entlang des Randbereichs der ersten Spule verläuft und durch die passive Leiterbahnstruktur von der ersten Spule elektrisch isoliert ist. Dadurch, dass die passive Leiterbahnstruktur bereits basisisoliert von der ersten Spule ist, dennoch hervorragend an die erste Spule thermisch angebunden ist, bewirkt eine effektive Kühlung der passiven Leiterbahnstruktur durch das flüssige Kühlmedium gleichfalls eine effiziente Kühlung der ersten Spule. Dies gelingt ferner dadurch, dass eine den äußeren Windungen der ersten Spule abgewandte Seite der passiven Struktur eine Seitenwand des Kühlkanals darstellt. Hierdurch kann das flüssige Kühlmedium direkt mit der passiven Leiterbahnstruktur in Kontakt gebracht werden, wodurch ein sehr geringer Wärmeübergang zur ersten Spule entsteht.

Durch die Realisierung einer Basisschutzes durch die kammartige in die äußeren Windungen der Spule eingreifende passive Leiterbahnstrukur gelingt es, ein hohe elektrische Isolationsfestigkeit mit einem guten thermischen Leitwert zwischen der Spule und der passiven Leiterbahnstruktur zu verbinden. Entsprechend effizient ist die Anbindung des Kühlkanals an den aktiven, wärmeerzeugenden Teil des Spulensystems.

Eine weitere Verbesserung des Wärmeübergangs gelingt dadurch, dass die dem flüssigen Kühlmedium zugewandte Oberfläche des Kühlkanals verkupfert ist, wobei die verkupferte Oberfläche des Kühlkanals galvanisch mit der Vielzahl aufeinander geschichteter Leiterbahnen der passiven Leiterbahnstruktur verbunden ist. Hierdurch wird der Wärmeübergangswiderstand zwischen dem flüssigen Kühlmedium und der passiven Leiterbahnstruktur weiter optimiert. Ermöglicht wird dies unter Einhaltung der gängigen Bestimmungen zum Berührschutz, insbesondere der DIN EN 60664-1, dadurch, dass die passive Leiterbahnstruktur von der ersten Spule basisisoliert ist.

Eine Erhöhung der magnetischen Flussdichte, die von der ersten Spule erzeugt werden kann, gelingt dadurch, dass die Vielzahl der übereinander geschichteter Planarspulen von einem Eisenkern durchsetzt ist. Dieser kann beispielsweise aus einem SMC-Material bestehen. Die vertikal übereinanderliegenden Wicklungen können voneinander durch eine dünne PrePreg-Schicht isoliert werden.

Wenn jeweils eine PrePreg-Deckschicht an einer Ober- und einer Unterseite des Stapels übereinander geschichteter Planarspulen vorgesehen wird, kann hierdurch eine Basisisolation des Spulensystems jeweils an den Oberflächen bewirkt werden. Wenn die erste Spule zudem von einem Eisenkern, insbesondere aus SMC-Material, durchsetzt wird, kann durch eine PrePreg-Schicht an der Ober- und Unterseite des Stapels erreicht werden, dass der Isolationsabstand zwischen dem Eisenkern und der jeweils innersten Windung der Planarspule geringer gewählt werden kann, als dies zur Realisierung einer Basisisolation erforderlich wäre. Denn die Basisisolation des gesamten Stapels wird über die ober- und unterseitigen PrePreg-Schichten bereits gewährleistet. Eine Verringerung des Abstandes zwischen dem Eisenkern und der jeweils innersten Windung jeder Planarspule erhöht weiter die maximal mögliche Flussdichte, die mit dem vorgeschlagenen Spulensystem erzeugt werden kann. Insbesondere dann, wenn ein Kühlkanal im Randbereich der ersten Spule vorgesehen wird, der von der passiven Leiterbahnstruktur von der ersten Spule getrennt ist, haben die ober- und unterseitigen PrePreg-Schichten auch keinen negativen Einfluss auf die Entwärmung des Spulensystems, da diese nicht an der Ober- und Unterseite maßgeblich erfolgt sondern an mindestens einer Stirnseite, an der der mindestens eine Kühlkanal verläuft.

Das Spulensystem kann als Multilayer-Platine ausgebildet sein, wobei die Wicklungen und die Leiterbahnen der passiven Leiterbahnstruktur jeder Schicht auf einer gemeinsamen Einzelplatine der Multilayer-Platine angeordnet sind. Hierbei werden in einem ersten Schritt Einzelplatinen hergestellt und metallisiert. Anschließend werden die gewünschten Leiterbahnen zur Bildung der jeweiligen Planarspulen und passiven Leiterbahnstruktur jeder einzelnen Schicht durch Ätzen herausgearbeitet. Auch der Raum für einen Kühlkanal zur Führung eines flüssigen Kühlmediums kann bereits auf jeder Einzelplatine vorgesehen sein. Die einzelnen Platinen werden anschließend derart zu einem Stack aufeinander geschichtet, dass sich der gewünschte laterale Versatz zwischen den aufeinander geschichteten Planarspulen ergibt, sodass sich die verschindelte Struktur ausbildet. Auch die passiven Leiterbahnen jeder einzelnen Platine sind lateral versetzt derart aufeinander geschichtet, dass sich die erste Kammstruktur ausbilden kann.

Zwischen den einzelnen Einzelplatinen werden zu Isolationszwecken beispielsweise PrePreg-Schichten angeordnet. Durch Verbacken des so aufgebauten Platinenstapels dienen die PrePreg-Schichten sowohl als Isolations- als auch als Klebeschicht zwischen den Leiterbahnen.

Elektrische VIAs werden anschließend eingebracht, um die vertikal benachbarten Planarspulen elektrisch miteinander zu verbinden. Der Kühlkanal kann im Anschluss in die Multilayer-Platine eingefräst werden. Dies geschieht an der Seite der passiven Leiterbahnstruktur, die der ersten Spule abgewandt ist. Nach dem Einfräsen des Kühlkanals kann der Kühlkanal an seiner Innenseite metallisiert, insbesondere verkupfert, werden. Eine solche den Kühlkanal auskleidende Kupferschicht ist vorteilhafterweise mit den zuvor aufgebrachten Leiterbahnen der passiven Leiterbahnstruktur galvanisch verbunden. Der Wärmewiderstand zwischen der passiven Leiterbahnstruktur und der inneren Auskleidung des so geschaffenen Kühlkanals ist somit minimiert. Eine alternative Ausführungsform des Spulensystems sieht vor, dass die Wicklungen und die Leiterbahnen der passiven Leiterbahnstruktur mehrerer Schichten durch ein Trennverfahren aus demselben Metallblech, insbesondere einem Kupferblech, hergestellt sind und dass zwischen jeweils zwei unmittelbar übereinanderliegenden Wicklungen eine Isolationsschicht angeordnet ist.

Die Planarspulen und die Leiterbahnen der passiven Leiterbahnstruktur jeder Schicht sind hierbei beispielsweise aus dem Metallblech gestanzt. Durch die Verwendung von gestanzten Spulen anstelle von einem Aufbau als Multilayer-Platine können in einem erheblichen Maße Kosten eingespart werden. Als Isolations- und Klebeschicht kann zwischen den einzelnen gestanzten Spulen wiederum PrePreg eingesetzt werden. Die hierbei unmittelbar aufeinander geschichteten Wicklungen können dabei durch Stifte aus elektrisch leitfähigem Material elektrisch miteinander verbunden werden, die die zwischen den Wicklungen vorhandenen Isolationsschichten, insbesondere die PrePreg-Schichten, durchdringen.

Eine besonders vorteilhafte und einfache Herstellung eines Spulensystems aus gestanzten Spulen entsteht dann, wenn der Blechschnitt der einzelnen Spulen, die übereinandergelegt werden, stets der gleiche ist. So ist eine Ausführungsform denkbar, bei der die Wicklungen und die Leiterbahnen der passiven Leiterbahnstruktur von vier übereinanderliegenden Schichten den gleichen Blechschnitt aufweisen. Besagter Blechschnitt innerhalb der vier übereinanderliegenden Schichten ist in einer zweiten Schicht als gespiegelter Blechschnitt der ersten Schicht angeordnet. In einer dritten Schicht wird der Blechschnitt der ersten Schicht um 180 Grad gedreht. In einer vierten Schicht wird der Blechschnitt der ersten Schicht gespiegelt und um 180 Grad gedreht. Somit entsteht ein Stack aus vier Schichten, der die gewünschte Verschindelung bewirkt. Diese Anordnung von vier Schichten kann beliebig oft wiederholt werden. Die hier beschrieben Reihenfolge ist nicht zwingend.

Selbstverständlich kann das Spulensystem auch mehr als eine Spule umfassen. Wenn neben der ersten Spule beispielsweise auch eine zweite Spule vorgesehen ist, so ist diese lateral versetzt zu der ersten Spule angeordnet. Auch diese zweite Spule umfasst aufeinandergestapelte und lateral zueinander versetzte Planarspulen; sie genügt also ebenfalls dem Verschindelungsprinzip. Der Wärmetransport in lateraler Richtung zwischen der ersten und der zweiten Spule wird dadurch gewährleistet, dass die äußeren Windungen der ersten Spule und die äußeren Windungen der zweiten Spule kammartig ineinandergreifen und somit in vertikaler Überdeckung zueinander stehen. Somit wird die Wärme von den äußeren Windungen der ersten Spule auf die äußeren Windungen der zweiten Spule wiederum in vertikaler Richtung zwischen übereinanderliegenden Leiterbahnabschnitten übertragen, um anschließend lateral weitertransportiert werden zu können.

Auf diese Art und Weise kann beispielsweise ein Primärteil eines Elektromotors mithilfe eines solchen Spulensystems realisiert werden. Bei diesem Elektromotor kann es sich zum Beispiel um einen Linearmotor handeln, der neben dem besagten Primärteil auch ein über einen Luftspalt vom Primärteil beabstandetes Sekundärteil aufweist, das insbesondere mit Permanentmagneten bestückt ist.

Bei einem Verfahren zur Herstellung eines Spulensystems gemäß einiger zuvor beschriebenen Ausführungsformen werden zunächst einzelne Schichten hergestellt, die jeweils eine Planarspule und eine in der jeweiligen Schicht zu einer äußeren Windung der Planarspule lateral versetzte passive Leiterbahn umfassen, die durch einen lateralen Isolationsabstand von der Planarspule elektrisch isoliert ist. Diese Schicht kann beispielsweise eine Leiterplatte sein, die entsprechend metallisiert und geätzt ist. Denkbar ist aber auch, dass die beschriebene Struktur beispielsweise aus einem Kupferblech gestanzt wurde.

Derartige einzelne Schichten werden anschließend übereinander zu einem Stack angeordnet. Bei dieser Anordnung entsteht die verschindelte Struktur, die den lateralen Wärmetransport im Stack bewirkt. Zwischen den jeweiligen Schichten wird jeweils eine Isolationsschicht angebracht. Ferner bilden die übereinander geschichteten passiven Leiterbahnen eine erste kammartige Struktur, die in einem Randbereich der ersten Spule in eine zweite kammartige Struktur eingreift, die durch den lateralen Versatz der äußeren Windungen der übereinanderliegenden Wicklungen entsteht.

Erfindungsgemäß ist darauf zu achten, dass zwischen der passiven Leiterbahnstruktur und den äußeren Windungen jeder Wicklung ein lateraler Abstand eingehalten wird, der eine Basisisolation der ersten Spule in dem Randbereich bewirkt, in dem die beiden kammartigen Strukturen ineinandergreifen. Selbstverständlich muss auch vertikal über die zwischenliegenden PrePreg-Schichten die Basisisolation gewährleistet sein.

Jeweils zwei übereinander gestapelte Schichten können durch eine Isolationsschicht voneinander getrennt werden, beispielsweise eine PrePreg-Schicht. Denkbar ist aber auch, insbesondere im Zusammenhang mit gestanzten Spulen, dass die hierfür verwendeten Blechschnitte pulverbeschichtet werden. Nach dem Übereinanderstapeln der einzelnen Schichten müssen jedoch noch gezielt elektrische Verbindungen zwischen den einzelnen Planarspulen angebracht werden. Hierzu kann zum Beispiel ein elektrisch leitfähiger Stift verwendet werden, der in entsprechende Bohrungen getrieben wird, die die Isolationsschicht durchdringen.

Im Folgenden wird die Erfindung anhand der in den Figuren dargestellten Ausführungsbeispiele näher erläutert.

Es zeigen:
- Figur 1:: Eine aus dem Stand der Technik bekannte Spule mit vertikal übereinanderliegenden Planarspulen,
- Figur 2:: eine aus dem Stand der Technik bekannte Spule mit vertikal übereinanderliegenden Planarspulen, bei der ein lateraler Versatz vertikal benachbarter Leiterbahnabschnitte vorgesehen ist,
- Figur 3:: eine Ausführungsform der Erfindung mit einem Spulensystem in Form zweier übereinandergestapelter Multilayerplatinen mit einem basisisolierten Kühlkanal,
- Figur 4:: ein Spulensystems mit vertikal übereinandergeschichteten, gestanzten Planarspulen,
- Figur 5:: eine Schnittdarstellung des Spulensystems aus Figur 4 mit vertikal übereinandergeschichteten, gestanzten Planarspule,
- Figur 6:: eine Blechschnitt eines Spulensystems nach den Figuren 4 und 5,
- Figur 7:: der Blechschnitt nach Figur 6 nach Drehung um 180° um eine Achse senkrecht zur Zeichenebene,
- Figur 8:: der Blechschnitt nach Figur 6 nach Spiegelung um die vertikale Mittenachse,
- Figur 9:: der Blechschnitt nach Figur 7 nach Spiegelung um die vertikale Mittenachse,
- Figur 10:: einen Schnitt durch ein als Leiterplatte ausgebildetes Spulensystem mit einem Eisenkern und ober- und unterseitigen PrePreg-Schichten,
- Figur 11:: einen Querschnitt auf ein weiteres als Leiterplatte ausgebildetes Spulensystem mit einer Vielzahl lateral benachbarter Spulen mit vertikal aufeinandergeschichteten Planarspulen und
- Figur 12:: einen Linearmotor mit einem als Multilayerplatine gemäß einer Ausführungsform der Erfindung ausgebildeten Primärteil.

Figur 1 zeigt eine aus dem Stand der Technik bekannte Spule mit vertikal übereinanderliegenden Planarspulen 1-6. Die Multilayer-Platine besteht insgesamt aus drei übereinandergeschichteten Einzelplatinen, die durch zwei Prepreg-Schichten 9 voneinander getrennt sind. Eine erste Platine dieses Platinenstacks ist an ihrer Oberseite mit einer ersten Planarspule 1 metallisiert und an ihrer Unterseite mit einer zweiten Planarspule 2. Unterhalb dieser ersten Platine befindet sich eine zweite Platine mit einer dritten Planarspule 3 an ihrer Oberseite und einer vierten Planarspule 4 an ihrer Unterseite. Zuunterst befindet sich eine dritte Platine mit einer fünften Planarspule 5 an ihrer Oberseite und einer sechsten Planarspule 6 an ihrer Unterseite. Diese drei Platinen werden mit der aus dem Stand der Technik bekannten Herstellungstechnologie gefertigt. Es handelt sich um baugleiche Platinen. Diese werden anschließend aufeinandergestapelt und durch das Prepreg 9 voneinander getrennt, was elektrisch isolierende Eigenschaften aufweist. Der so gebildete Platinenstack wird anschließend verbacken, sodass die Prepreg-Schichten 9 die drei Einzelplatinen miteinander mechanisch verbinden und elektrisch voneinander isolieren. Die Prepreg Schichten 9 werden lediglich durch hier nicht dargestellt Vias an einigen Stellen durchdrungen, die die vertikal übereinanderliegenden Planarspulen 1-6 in Reihe schalten.

Wie bereits eingangs erwähnt, ist die thermische Leitfähigkeit in lateraler Richtung bei diesem Aufbau der Multilayer-Platine bzw. des hiermit realisierten Spulensystems relativ gering, da aus fertigungstechnischen Gründen in jeder Ebene ein relativ großer Isolationsabstand zwischen den lateral benachbarten Windungen der Wicklungen eingehalten werden muss. Die Dicke der Leiterbahn, die ebenfalls den lateralen Wärmeleitwert innerhalb einer Schicht der Multilayer-Platine bestimmt, liegt im Bereich von ca. 100 µm. Dieser elektrische Isolationsabstand hat einen relativ großen thermischen Widerstand zur Folge.

Zur Verbesserung des lateralen Wärmetransports ist die in Figur 2 dargestellte und ebenfalls aus dem Stand der Technik bekannte Spule vorteilhaft, bei der ebenfalls Planarspulen 1-6 vertikal übereinanderliegen. Zur Verbesserung des Wärmetransports ist hier jedoch ein lateraler Versatz der vertikal unmittelbar benachbarten Leiterbahnabschnitte vorgesehen. Auf diese Art und Weise kann die Wärme aus dem Inneren der Platine sehr viel leichter in lateraler Richtung transportiert werden, da nunmehr ein schichtübergreifender Wärmeübergang zwischen den Einzelplatinen ermöglicht wird, dessen Wäremewiderstand von dem vertikalen Isolationsabstand zwischen den Planarspulen und dem Überdeckungsbereich der einzelnen Leiterbahnabschnitte der vertikal benachbarten Planarspulen bestimmt wird. Diese Wärmewiderstand ist deutlich geringer als der innerhalb einer Schicht der Platine, was darauf zurückzuführen ist, dass die Prepreg-Schichten 9 im Vergleich zum lateralen Abstand der einzelnen Windungen relativ dünn sind und der Überlappungsbereich der Leiterbahnen im Vergleich zur vertikalen Dicke der Leiterbahnen vergleichsweise groß ist. Entsprechend ist ein Wärmeübergang von einem Leiterbahnabschnitt einer Schicht zu einem vertikal benachbarten Leiterbahnabschnitt durch die Prepreg-Schicht 9 hindurch mit einem deutlich geringeren Wärmeübergangswiderstand verbunden als ein Wärmeübergang von einer Windung zu einer lateral benachbarten Windung derselben Ebene der Multilayer-Platine. Dieser Wärmetransport ist in Figur 2 durch Pfeile veranschaulicht.

Am lateralen Rand der in Figur 2 dargestellten Multilayer-Platine befindet sich eine passive Leiterbahnstruktur 7. Diese greift kammartig in die äußeren Windungen der Wicklungen 2, 4, 6 ein. Die passive Leiterbahnstruktur 7 ist elektrisch von allen stromführenden Leiterbahnen der Multilayer-Platine elektrisch isoliert. Durch die kammartige Anordnung der passiven Leiterbahnstruktur 7 kann ein Wärmeübergang in vertikaler Richtung von den äußeren Windungen der Planarspulen 2, 4, 6 auf die Leiterbahnen der passiven Leiterbahnstruktur 7 erfolgen, wobei auch bei diesem Wärmeübergang nur der vergleichsweise geringe Wärmewiderstand in vertikaler Richtung zu überwinden ist, der durch die Prepreg-Schicht 9 verursacht wird. Die Multilayer-Platine ist durch ein passives Via 8 durchsetzt, das mit einem Kühlkörper 10 in Berührung steht, der sich an der Oberseite der Multilayer-Platine befindet. Dementsprechend wird die Wärme von den einzelnen Leiterbahnen der passiven Leiterbahnstruktur 7 durch das thermische Via 8 in vertikaler Richtung zum Kühlkörper 10 geleitet.

Sofern der hier nur schematisch dargestellte Kühlkörper 10 im Betrieb von einem Benutzer berührt werden kann oder beispielsweise mit einem flüssigen Kühlmedium in Berührung steht, ist zwischen dem Kühlkörper 10 und der passiven Leiterbahnstruktur 7 bzw. dem thermischen Via 8 eine Basisisolation vorzusehen, um einen entsprechenden Berührschutz zu gewährleisten. Eine derartige, in der Figur 2 nicht dargestellte Basisisolation hat jedoch einen hohen thermischen Widerstand zur Folge, der dem Wärmeabtransport von der passiven Leiterbahnstruktur 7 zum Kühlmedium entgegensteht.

Figur 3 zeigt eine Ausführungsform der Erfindung mit einem Spulensystem in Form zweier übereinandergestapelter Multilayer-Platinen 11, 12 mit jeweils einem basisisolierten Kühlkanal 13. Die beiden Multilayer-Platinen 11, 12 sind identisch aufgebaut. Auf eine untere Multilayer-Platine 11 ist eine obere Multilayer-Platine 12 derselben Bauform um 180° gedreht aufgesetzt worden. Zwischen den beiden MultilayerPlatinen 11, 12 befindet sich eine Isolationsschicht aus Prepreg 9.

Die Planarspulen 1-6 weisen dieselbe verschindelte Anordnung auf, wie sie bereits im Zusammenhang mit Figur 2 erläutert wurde. Auch greifen die äußeren Wicklungen der spiralförmigen, aufeinandergestapelten Wicklungen 1-6 kammartig in eine passive Leiterbahnstruktur 7 ein. Lateral angrenzend an diese passive Leiterbahnstruktur 7 befindet sich jeweils ein Kühlkanal 13, der in die Multilayer-Platinen 11, 12 eingefräst wurde und an seiner Innenseite metallisiert wurde, bevor die Multilayer-Platinen 11, 12 aufeinandergeschichtet wurden. Eine an der Innenseite des jeweiligen Kühlkanals 13 aufgebrachte Metallisierung 14 ist galvanisch mit der passiven Leiterbahnstruktur 7 verbunden, sodass die Leiterbahnstruktur 7 thermisch hervorragend an die Innenwandung des jeweiligen Kühlkanals 13 angebunden ist. Der Kühlkanal 13 wird durch ein flüssiges Kühlmedium durchströmt, sodass eine effiziente Wärmeabfuhr der über die passive Leiterstruktur 7 eingetragenen Wärme erfolgt.

Entscheidend für diesen sehr effektiven Wärmeübergang ist, dass die passive Leiterbahnstruktur 7 von den spannungsführenden Wicklungen 1-6 des Spulensystems basisisoliert ist. Dies ermöglicht die niederohmige Anbindung der passiven Leiterbahnstruktur 7 an die Metallisierung 14 der Innenwandung des Kühlkanals 13. Die Basisisolation wird in diesem Beispiel dadurch sichergestellt, dass der laterale Isolationsabstand 15 zwischen der passiven Leiterbahnstruktur 7 und den äußeren Windungen der ersten Spule an keiner Stelle geringer als das sechsfache des vertikalen Abstandes der unmittelbar übereinanderliegenden Wicklungen 1-6 ist. Dies setzt natürlich voraus, dass auch der vertikale Isolationsabstand, der durch die Prepreg-Schichten 9 gewährleistet wird, die Anforderung an die Basisisolation erfüllt, das heißt, dick genug ist, um die Basisisolation und den dadurch sichergestellten Berührschutz zu gewährleisten.

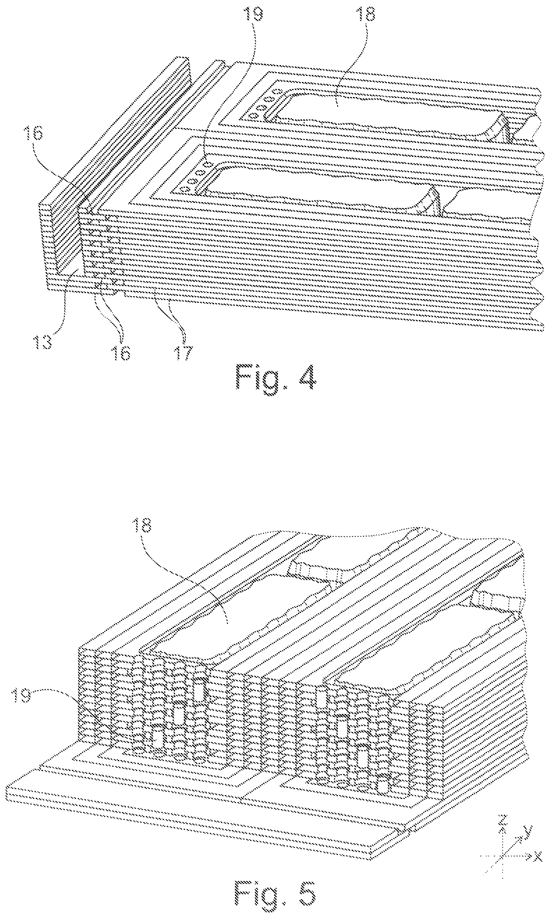

Figur 4 zeigt ein Spulensystem mit vertikal übereinandergeschichteten, gestanzten, Planarspulen 17. Jede Planarspule 17 ist aus einem Metallblech, insbesondere einem Kupferblech gemeinsam mit einer passiven Leiterbahn 16 gestanzt worden. Die aufeinanderliegenden, passiven, gestanzten Leiterbahnen 16 greifen kammartig in die äußeren Windungen der gestanzten Spulen 17 ein. Die aufeinandergestapelten Blechschnitte mit den sich ergebenden gestanzten Wicklungen 17 und den gestanzten passiven Leiterbahnen 16 sind so ausgebildet, dass sich an einem stirnseitigen Ende wiederum ein Kühlkanal 13 ausbilden kann. Die gezeigte Anordnung, die den Kühlkanal 13 ausbildet, befindet sich ebenfalls an dem hier nicht dargestellten gegenüberliegenden, stirnseitigen Ende des Spulensystems.

Zwischen den einzelnen gestanzten Wicklungen 17 befindet sich auch hier jeweils eine Prepreg-Schicht. Die Prepreg-Schichten werden zwischen die gestanzten Wicklungen vor dem Aufeinanderstapeln dieser Wicklungen 17 gelegt. Anschließend wird der ganze Stack im Ofen verbacken, sodass ein mechanischer Verbund elektrisch voneinander isolierter, gestanzter Wicklungen 17 entsteht.

Wichtiges Kriterium bei der Dimensionierung der Abstände zwischen den Windungen der gestanzten Wicklung und zwischen den gestanzten Wicklungen 17 und den gestanzten passiven Leiterbahnen 16 ist abermals die Gewährleistung einer Basisisolation zum Kühlkanal 13.

Zur Erhöhung der magnetischen Flussdichte, die mit dem dargestellten Spulensystem erzeugt werden kann, werden die spiralförmigen, gestanzten Wicklungen 17 axial von Eisenkernen 18 aus SMC-Material durchsetzt.

Um aus den einzelnen, übereinandergeschichteten, gestanzten Wicklungen 17 ein Spulensystem in der Art einer Solenoidspule zu realisieren, müssen die übereinanderliegenden, gestanzten Wicklungen 17 elektrisch miteinander verbunden werden. Dies geschieht durch das gezielte Einbringen elektrischer Vias 19 zwischen den vertikal benachbarten, gestanzten Wicklungen 17. Diese elektrischen Vias 19 sind in Figur 5 deutlicher zu erkennen, die eine Schnittdarstellung des Spulensystems aus Figur 4 darstellt. Bei den elektrischen Vias 19 handelt es sich um Metallstifte, insbesondere Kupferstifte, die in entsprechende Bohrungen eingebracht werden. Nachdem der Wicklungsstapel an den entsprechenden Stellen durchbohrt wird, werden zunächst elektrisch leitende Stifte in die Bohrlöcher eingetrieben, die den kompletten Wicklungsstapel durchdringen. Um die dargestellten, gezielten elektrischen Verbindungen zwischen jeweils zwei vertikal benachbarten, gestanzten Wicklungen 17 zu realisieren, wird im Anschluss der unerwünschte Teil jedes elektrisch leitenden Stiftes ausgebohrt, sodass das elektrische Via 19 jeweils nur an der gewünschten Stelle verbleibt.

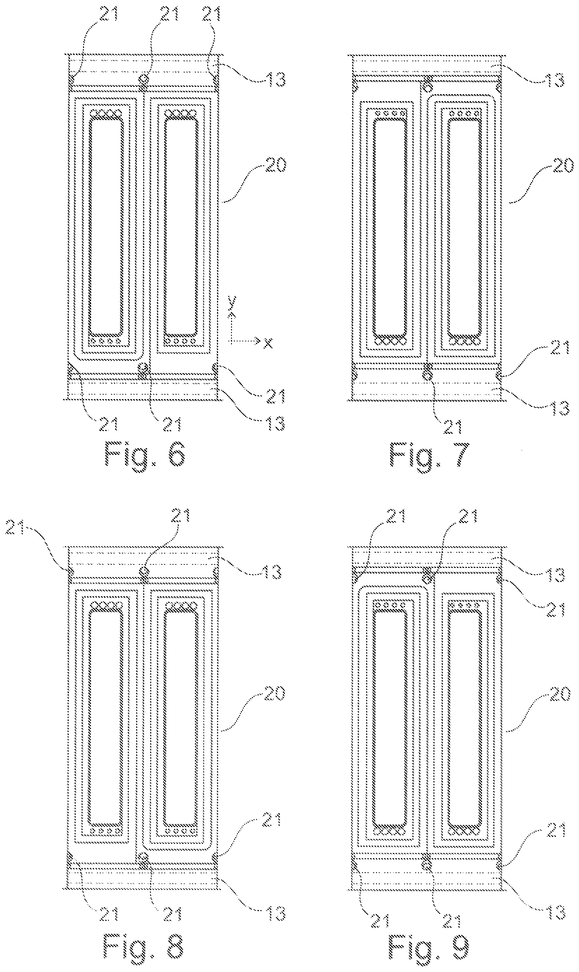

Die Figuren 6-9 zeigen einen Blechschnitt 20, auf dessen Grundlage das in den Figuren 4 und 5 dargestellte Spulensystem aufgebaut ist. In allen Figuren ist der gleiche Blechschnitt 20 dargestellt. Figur 7 zeigt den Blechschnitt nach Figur 6 nach einer Drehung um 180° um eine Drehachse senkrecht zur Zeichnungsebene. Figur 8 zeigt den Blechschnitt nach Figur 6, nachdem dieser an der vertikalen Mittenachse, der Y-Achse, gespiegelt wurde. Der Blechschnitt in Figur 9 entspricht dem Blechschnitt aus Figur 7, jedoch ebenfalls an der vertikal verlaufenden Mittenachse gespiegelt. Auf die Darstellung in Figur 6 bezogen entspricht der in Figur 9 dargestellte Blechschnitt einer Drehung des Blechschnitts gemäß Figur 6 um 180° um die orthogonal zur x- und y-Ebene verlaufende Drehachse und anschließenden Spiegelung an der vertikal verlaufenden Mittenachse, der Y-Achse.

Das in den Figuren 4 und 5 dargestellte Spulensystem kann nun sehr einfach dadurch aufgebaut werden, dass man Blechschnitte 20 in den in den Figuren 6-9 dargestellten Lagen sukzessive aufeinanderstapelt. Das heißt, auf einen Blechschnitt gemäß Figur 6 folgt ein Blechschnitt gemäß Figur 7, auf den wiederum ein Blechschnitt gemäß Figur 8 gelegt wird und schließlich ein Blechschnitt gemäß Figur 9 den so entstandenen Stapel nach oben hin abschließt. Zwischen die Blechschnitte 20 wird jeweils eine Prepreg-Schicht zur Isolation gelegt.

Da die Blechschnitte 20 weder bezüglich ihrer Längsachse Y noch bezüglich ihrer Querachse X eine Achsensymmetrie aufweisen, entsteht beim Aufeinanderstapeln der Blechschnitte 20 die gewünschte Verschindelung, die für den vorteilhaften, lateralen Wärmetransport innerhalb des Spulensystems verantwortlich ist.

An den stirnseitigen Enden des Blechschnitts 20 ist durch eine gestrichelte Linie die Position des Kühlkanals markiert. Dieser wird erst nach dem Aufeinanderstapeln der einzelnen Blechschnitte 20 in den so entstandenen Stack eingefräst und anschließend metallisiert.

Selbstverständlich kann das Spulensystem aus mehr als vier gestanzten, Planarspulen bestehen. Die Reihenfolge der Anordnung der Blechschnitte 20 setzt sich dann sukzessive wie im Zusammenhang mit den Figuren 6-9 beschrieben fort. Das heißt, auf den Blechschnitt gemäß Figur 9 folgt anschließend wieder ein Blechschnitt gemäß Figur 6, der wiederum von einem Blechschnitt gemäß Figur 7 abgedeckt wird, und so weiter. Auch kann die Reihenfolge der Schichtung geändert werden, solange die gewünschte Verschindelung erhalten bleibt.

Mit dem Bezugszeichen 21 sind in den Figuren 6-9 die Positionen der Blechschnitte 20 markiert, in die nach dem Aufeinanderstapeln der Blechschnitte 20 Bohrungen 21 eingebracht werden. Diese Bohrungen trennen nach dem Schichtverkleben den elektrischen Kontakt zum Kühlkanal auf.

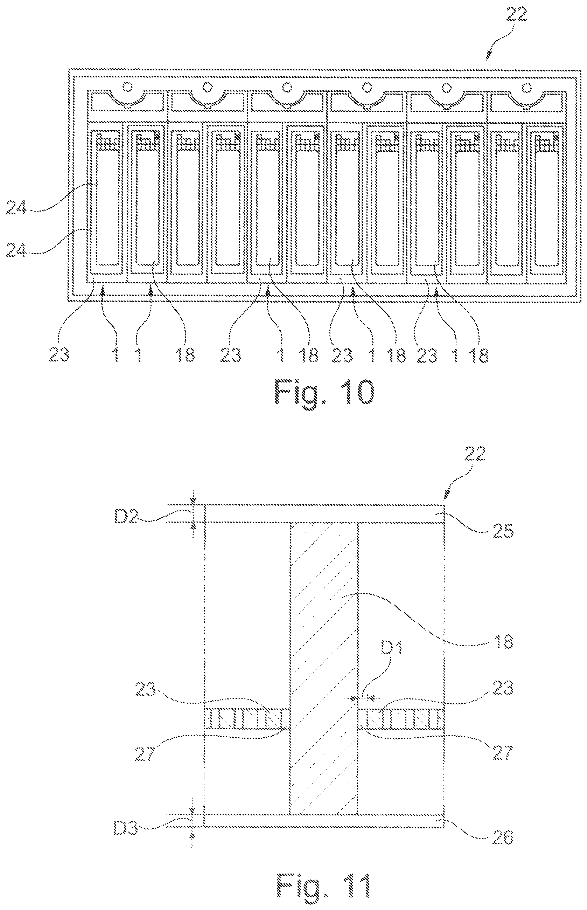

In der Fig. 10 ist eine Schnittdarstellung durch eine Leiterplatte 22 gemäß einer Ausführungsbeispiel der Erfindung gezeigt. Die Schnittebene verläuft parallel zu der Plattenebene der Leiterplatte 22 durch eine innere Lage der Leiterplatte 22. Die innere Lage der Leiterplatte 22 weist mehrere Leiterbahnen 23 auf, welche spiralförmig verlaufend ausgebildet sind, so dass innerhalb dieser Lage mehrere Wicklungen 1 gebildet sind. Mittels jeder Wicklung 1 kann ein magnetisches Feld erzeugt werden, welches senkrecht zu der Plattenebene der Leiterplatte 22 - hier der Schnittebene - ausgerichtet ist. Das magnetische Feld hat sein Maximum in der Mitte der jeweiligen durch die Leiterbahn 23 gebildeten Spirale.

Die Leiterbahn 23 ist aus einem metallischen Material ausgebildet, bevorzugt aus einem kupferhaltigen Material, besonders bevorzugt aus Kupfer. Die Leiterbahn 23 ist von einem dielektrischen Material 24 umgeben, welches die einzelnen Abschnitte der spiralförmigen Leiterbahn 23 elektrisch gegeneinander isoliert. Bei dem dielektrischen Material 24 handelt es sich bevorzugt um ein FR4-Material.

Zusätzlich zu der in der Fig. 10 gezeigten Lage der Leiterplatte 22 weist die Leiterplatte 22 weitere Lagen auf. Insofern handelt es sich bei der Leiterplatte 22 um eine Mehrlagenleiterplatte, die auch als Multi-Layer-Platine bezeichnet wird. Die Leiterplatte 22 kann vier, acht, zehn, zwölf, vierzehn oder mehr Lagen aufweisen, wobei in jeder Lage Leiterbahnen angeordnet sind. Die Leiterbahnen der anderen Lagen weisen ebenfalls eine spiralförmige Struktur auf, so dass auch in diesen Lagen Planarspulen gebildet sind. Die Leiterbahnen 23 jeweils benachbarter Lagen sind über so genannte Vias 19, elektrisch leitende Verbindungen senkrecht zur Plattenebene, miteinander verbunden. Bei der in Fig. 10 gezeigten Lage sind beispielsweise Vias 19 vorgesehen, welche die Leiterbahnen 3 mit den Leiterbahnen der benachbarten Lagen verbinden, so dass Wicklungen 1 gebildet werden, die sich in einer Richtung senkrecht zur Plattenebene erstrecken.

Innerhalb der Leiterplatte 22 sind zudem mehrere separate Eisenkerne 18 aus einem ferromagnetischen oder ferrimagnetischen Material angeordnet. Jeder Eisenkern 18 erstreckt sich in einer Richtung, die senkrecht zu den Lagen der Leiterplatte 22 angeordnet ist. Der Eisenlern 18 ist aus Blechen und/oder Schichten aus gepressten Pulvermaterial gebildet. Bei dem Material des Eisenkerns 18 handelt es sich um Eisen, eine ferromagnetische Legierung oder ein Ferrit. Der Eisenkern 18 ist jeweils innerhalb der spiralförmigen Leiterbahn 23 vorgesehen, welche eine Wicklung 1 bildet. Durch den Eisenkern 18 wird der von der Wicklung 1 erzeugte magnetische Fluss gebündelt und die magnetische Flussdichte verstärkt.

Die Eisenkerne 18 sind vollständig innerhalb der Leiterplatte 22 vorgesehen und gegenüber der Umgebung der Leiterplatte 22 elektrisch isoliert. Die Isolierung der Eisenkerne 18 erfolgt über eine erste dielektrische Schicht, die parallel zu den Lagen der Leiterplatte 22 angeordnet ist, beispielsweise eine dielektrische Deckschicht der Leiterplatte 22. Über die erste dielektrische Schicht kann der jeweilige Eisenkern 18 an einer ersten Oberfläche der Leiterplatte 22 gegenüber der Umgebung isoliert sein. Ferner weist die Leiterplatte 22 eine zweite dielektrische Schicht auf, die ebenfalls parallel zu den Lagen der Leiterplatte 22 angeordnet ist. Die Eisenkerne 18 sind innerhalb der Leiterplatte 22 zwischen der ersten und der zweiten dielektrischen Schicht angeordnet. Insofern wird jeder Eisenkern 18 gegenüber der Umgebung durch die erste dielektrische Schicht an einer ersten Oberfläche der Leiterplatte 22 isoliert und durch die zweite dielektrische Schicht an einer zweiten Oberfläche, welche der ersten Oberfläche gegenüberliegt.

Die erste und die zweite dielektrische Schicht sind aus einem FR4-Material gebildet. Die Wärmeleitfähigkeit des FR4-Materials beträgt bevorzugt mindestens 0,5 W/(mK), besonders bevorzugt mindestens 1 W/(mK), so dass die beim Betrieb der Spule entstehende ohmsche Verlustwärme verbessert durch die erste und zweite dielektrischen Schicht nach außen geführt abgeleitet kann.

Die erste und die zweite dielektrische Schicht stellen eine Basisisolierung des Eisenkerns 18 gegenüber der Umgebung der Leiterplatte 22 bereit. Die Anordnung der Eisenkerne 18 vollständig innerhalb der Leiterplatte 22 ermöglicht zum Beispiel eine kompakte Ausgestaltung eines Elektromotors, darüber hinaus erlaubt es auch, die im Inneren der Leiterplatte 22 vorgesehene Isolierung zwischen dem jeweiligen Eisenkern 18 und der zugehörigen Wicklung 1 schwächer auszulegen und damit die Leistungsfähigkeit der Wicklung 1 und der resultierenden Spule aus den übereinandergeschichteten Wicklungen bzw. des Elektromotors, in welchem die Leiterplatte 22 verwendet wird, zu steigern. Diese Vorteile sollen nachfolgend anhand der Darstellung in Fig. 11 näher erläutert werden.

Die Fig. 11 zeigt ein zweites Ausführungsbeispiel einer Leiterplatte 22 für einen Elektromotor. Im Gegensatz zu dem in Fig. 10 gezeigten Ausführungsbeispiel ist in Fig. 11 nur ein Eisenkern 18 gezeigt. Die Leiterplatte 22 dieses weiteren Ausführungsbeispiels kann, ebenso wie die Leiterplatte nach Fig. 110, mehrere separate Eisenkerne 18 aus einem ferromagnetischen oder ferrimagnetischen Material aufweisen. An einer ersten Oberfläche der Leiterplatte 22, die nachfolgend als Oberseite bezeichnet wird, ist eine erste dielektrische Schicht 25 vorgesehen. An einer der ersten Oberfläche gegenüberliegenden zweiten Oberfläche der Leiterplatte 1, im Folgenden als Unterseite bezeichnet, ist eine zweite dielektrische Schicht 26 angeordnet. Der Eisenkern 18 ist somit innerhalb der Leiterplatte 22 zwischen der ersten dielektrischen Schicht 25 und der zweiten dielektrischen Schicht 26 angeordnet. Die erste dielektrische Schicht 25 bildet eine Deckschicht an der Oberseite der Leiterplatte 22 und die zweite dielektrische Schicht 26 bildet eine Deckschicht an der Unterseite der Leiterplatte 22.

Die Darstellung in Fig. 11 zeigt ferner eine Lage der Leiterplatte 22, die eine spiralförmige Leiterbahn 23 aufweist. Neben der gezeigten Lage können weitere Lagen mit insbesondere spiralförmigen Leiterbahn 23 vorhanden sein, welche mit der Leiterbahn 23 der dargestellten Lage elektrisch verbunden sind. Zur elektrischen Isolierung der Leiterbahn 23 gegenüber dem Eisenkern 18 ist ein isolierender Bereich 27 der Lage vorgesehen. Der isolierende Bereich 27 ist aus einem dielektrischen Material ausgebildet, beispielsweise aus einem FR4-Material. Das Material des isolierenden Bereichs 27 und/oder die Dimensionierung des isolierenden Bereichs 27 ist derart gewählt, dass die erste dielektrische Schicht 25 und die zweite dielektrische Schicht 26 im Vergleich zu dem isolierenden Bereich eine größere Durchschlagspannung und/oder einen größeren Isolationswiderstand aufweisen. Somit kann über die erste dielektrische Schicht 25 und die zweite dielektrische Schicht 26 die Basisisolierung von Spule und Eisenkern gegenüber der Umgebung ermöglicht werden. Die Isolierung zwischen der Leiterbahn 23 der Wicklung und dem Eisenkern 18 muss lediglich den geringeren Anforderungen einer Funktionsisolierung genügen. Optional kann vorgesehen sein, dass der isolierende Bereich 27 und die erste dielektrische Schicht 25 und die zweite dielektrische Schicht 26 aus demselben dielektrischen Material gebildet sind und eine erste Dicke D1 des isolierenden Bereichs 27 geringer ist als eine zweite Dicke D2 der ersten dielektrischen Schicht 25 und geringer ist als eine dritte Dicke D3 der zweiten dielektrischen Schicht 26. Alternativ ist es möglich, dass der isolierende Bereich 27 aus einem anderen dielektrischen Material gebildet ist als die erste dielektrische Schicht 25 und die zweite dielektrische Schicht 26, wobei die erste Dicke D1 des isolierenden Bereichs 27 größer ist als die zweite Dicke D2 der ersten dielektrischen Schicht 25 und größer ist als die dritte Dicke D3 der zweiten dielektrischen Schicht 26. Beispielsweise kann die erste Dicke D1 des isolierenden Bereichs 27 im Bereich von 200 µm bis 300 µm, liegen und die zweite Dicke D2 der ersten dielektrischen Schicht 25 und die dritte Dicke D3 der zweiten dielektrischen Schicht 26 können im Bereich von 110 µm bis 190 µm, bevorzugt im Bereich von 140 µm bis 160 µm, besonders bevorzugt bei 150 µm, liegen.

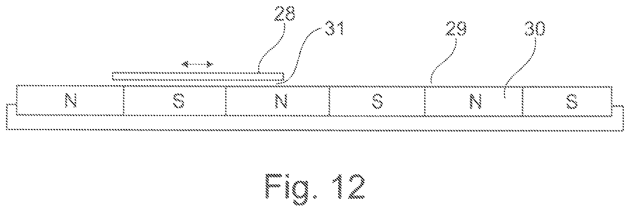

Figur 12 zeigt schematisch einen Linearmotor mit einem Primärteil 28, welches wie als Multilayer-Platine aufgebaut sein kann. Ein solches Primärteil 28 ist sehr kompakt und leicht, sodass es sich für hochdynamische Anwendungen besonders gut eignet. Dieses Primärteil 28 steht in einer elektromagnetischen Wechselwirkung mit einem Sekundärteil 29. Das Sekundärteil 29 umfasst Permanentmagnete 30, die in ein Weicheisenbett eingebettet sind. Primärteil 28 und Sekundärteil 29 sind über einen Luftspalt 31 voneinander beabstandet. Durch geeignete Bestromung der im Primärteil 28 vorhandenen Solenoidspulen kann eine translatorische hochdynamische Bewegung des Primärteils 28 realisiert werden.

### Bezugszeichenliste

- 1-6: Planarspulen
- 7: Passive Leiterbahnstruktur
- 8: Thermisches Via
- 9: PrePreg-Schicht
- 10: Kühlkörper
- 11: untere Multilayerplatine
- 12: obere Multilayerplatine
- 13: Kühlkanal
- 14: Metallisierung
- 15: lateraler Isloationsabstand
- 16: gestanzte passive Leiterbahn
- 17: gestanzte Wicklung
- 18: Eisenkern
- 19: elektrische Vias
- 20: Blechschnitt
- 21: Bohrungen
- 22: Leiterplatte
- 23: Leiterbahn
- 24: dielektrischen Material
- 25: erste dielektrische Schicht
- 26: zweite dielektrische Schicht
- 27: isolierender Bereich
- 28: Primärteil
- 29: Sekundärteil
- 30: Permanentmagnete
- 31: Luftspalt

## Patentansprüche

1. Spulensystem umfassend eine erste Spule mit einer Vielzahl übereinandergeschichteter Planarspulen (1-6),
• wobei jeweils zwei unmittelbar übereinanderliegende Planarspulen (1-6) derart mit einem lateralen Versatz vertikal aufeinandergeschichtet sind, dass zumindest abschnittsweise jeweils eine Windung einer ersten Planarspule (1) und zwei Windungen einer unmittelbar über der ersten Planarspule angeordneten zweiten Planarspule (2) in teilweiser Überdeckung angeordnet sind,
• wobei das Spulensystem eine von allen stromführenden Planarspulen (1-6) des Spulensystems galvanisch getrennte passiven Leiterbahnstruktur (7) umfasst, die eine Vielzahl aufeinandergeschichteter Leiterbahnen (23) aufweist, die eine erste kammartige Struktur bilden,
• wobei die erste kammartige Struktur an zumindest einem Randbereich der ersten Spule in eine zweite kammartige Struktur eingreift, die durch den lateralen Versatz der äußeren Windungen der übereinanderliegenden Planarspulen (1-6) entsteht,
**dadurch gekennzeichnet, dass** der laterale Isolationsabstand (15) der äußeren Windung jeder Planarspule (1-6) zur passiven Leiterbahnstruktur (7) derart bemessen ist, dass er eine Basisisolation der ersten Spule gegenüber der passiven Leiterbahnstruktur (7) bewirkt und wobei das Spulensystem einen Kühlkanal (13) für ein flüssiges Kühlmedium umfasst, der sich lateral angrenzend an die passive Leiterbahnstruktur (7) befindet und entlang des Randbereiches der ersten Spule verläuft und über den lateralen Isolationsabstand (15) zwischen der passiven Leiterbahnstruktur (7) und den äußeren Windungen der Planarspulen (1-6) von der ersten Spule elektrisch basisisoliert ist.

2. Spulensystem nach Anspruch 1, wobei die beiden kammartigen Strukturen derart zueinander angeordnet sind, dass der laterale Isolationsabstand (15) zwischen der passiven Leiterbahnstruktur (7) und den äußeren Windungen der ersten Spule an keiner Stelle geringer als das 6-fache des vertikalen Abstandes der unmittelbar übereinanderliegenden Planarspulen (1-6) ist.

3. Spulensystem nach Anspruch 1 oder 2, wobei eine den äußeren Windungen der ersten Spule abgewandte Seite der passiven Leiterbahnstruktur (7) eine Seitenwand des Kühlkanals (13) darstellt.

4. Spulensystem nach Anspruch 3, wobei die dem flüssigen Kühlmedium zugewandte Oberfläche des Kühlkanals (13) verkupfert ist, wobei die verkupferte Oberfläche des Kühlkanals (13) galvanisch mit der Vielzahl aufeinandergeschichteter Leiterbahnen der passiven Leiterbahnstruktur (7) verbunden ist.

5. Spulensystem nach einem der vorhergehenden Ansprüche, wobei die Vielzahl übereinandergeschichteter Planarspulen (1-6) von einem Eisenkern (18) durchsetzt ist.

6. Spulensystem nach Anspruch 5, wobei der Eisenkern (18) aus einem SMC Material besteht.

7. Spulensystem nach einem der vorhergehenden Ansprüche, wobei zwischen jeweils zwei unmittelbar übereinanderliegende Planarspulen (1-6) eine PrePreg-Schicht (9) angeordnet ist.

8. Spulensystem nach einem der vorhergehenden Ansprüche mit jeweils eine PrePreg-Deckschicht (25,26) an einer Ober- und einer Unterseite des Stapels übereinandergeschichteter Planarspulen (1-6), die eine Basisisolation des Spulensystems bewirken.

9. Spulensystem nach einem der vorhergehenden Ansprüche, wobei das Spulensystem als Multilayer-Platine (11,12,22) ausgebildet sind und wobei die Planarspulen (1-6) und die Leiterbahnen der passiven Leiterbahnstruktur (7) jeder Schicht auf einer gemeinsamen Einzelplatine der Multilayer-Platine (11,12,22) angeordnet sind.

10. Spulensystem nach einem der Ansprüche 1 bis 8, wobei die Planarspulen (1-6) und die Leiterbahnen der passiven Leitbahnstruktur (7) mehrerer Schichten durch ein Trennverfahren aus demselben Metallblech, insbesondere einem Kupferblech, hergestellt sind und wobei zwischen jeweils zwei unmittelbar übereinanderliegenden Planarspulen (1-6) eine Isolationsschicht (9) angeordnet ist.

11. Spulensystem nach Anspruch 10, wobei die Planarspulen (1-6) und die Leiterbahnen der passiven Leitbahnstruktur (7) jeder Schicht aus dem Metallblech gestanzt sind.

12. Spulensystem nach Anspruch 10 oder 11, wobei die Planarspulen (1-6) und die Leiterbahnen der passiven Leitbahnstruktur (7) von vier übereinanderliegenden Schichten den gleichen Blechschnitt (20) aufweisen, wobei besagter Blechschnitt (20) innerhalb der vier übereinanderliegenden Schichten
• in einer zweiten Schicht als gespiegelter Blechschnitt (20) der ersten Schicht,
• in einer dritten Schicht als um 180° gedrehter Blechschnitt (20) der ersten Schicht und
• in einer vierten Schicht als gespiegelter und um 180° gedrehter Blechschnitt (20) der ersten Schicht
angeordnet ist.

13. Spulensystem nach einem der Ansprüche 10 bis 12, wobei die unmittelbar aufeinandergeschichteten Planarspulen (1-6) durch Stifte (19) aus elektrisch leitfähigem Material, die die zwischen den Planarspulen (1-6) vorhandenen Isolationsschichten (9) durchdringen, elektrisch verbunden sind.

14. Spulensystem nach einem der vorhergehenden Ansprüche mit einer zweiten Spule, die lateral versetzt zu der ersten Spule angeordnet ist und ebenfalls aufeinandergeschichtete und lateral zueinander versetzte Planarspulen (1-6) umfasst, wobei äußere Windungen der ersten Spule und äußere Windungen der zweiten Spule kammartige ineinander greifen.

15. Elektromotor mit einem Primärteil (28) umfassend ein Spulensystem nach einem der vorhergehenden Ansprüche und einem von dem Primärteil (28) über einen Luftspalt (31) beabstandetes Sekundärteil (29).

16. Verfahren zur Herstellung eines Spulensystems mit folgenden Verfahrensschritten:
• Herstellung einzelner Schichten mit jeweils
∘ einer Planarspule (1-6) und
∘ einer in der jeweiligen Schicht zu einer äußeren Windung der jeweiligen Planarspule (1-6) lateral versetzten passiven Leiterbahn, die durch einen lateralen Isolationsabstand (15) von der jeweiligen Planarspule (1-6) elektrisch isoliert ist,
• Übereinanderschichten der einzelnen Schichten zu einem Stack derart, dass
∘ jeweils zwei unmittelbar übereinanderliegende Planarspulen (1-6) mit einem lateralen Versatz vertikal aufeinandergeschichtet werden, so dass zumindest abschnittsweise jeweils eine Windung einer ersten Planarspule (1) und zwei Windungen einer unmittelbar über der ersten Planarspule (1) angeordneten zweiten Planarspule (2) in teilweiser Überdeckung angeordnet sind,
∘ und die übereinanderliegenden passiven Leiterbahnen eine erste kammartige Struktur bilden, wobei die erste kammartige Struktur an zumindest einem Randbereich der ersten Spule in eine zweite kammartige Struktur eingreift, die durch den lateralen Versatz der äußeren Windungen der übereinanderliegenden Planarspulen (1-6) entsteht,
**dadurch gekennzeichnet, dass** der laterale Abstand der äußeren Windung jeder Planarspule (1-6) zur passiven Leiterbahnstruktur (7) derart bemessen wird, dass er eine Basisisolation der ersten Spule gegenüber der passiven Leiterbahnstruktur (7) bewirkt und wobei ein Kühlkanal (13) für ein flüssiges Kühlmedium in den Stack gefräst wird, der sich lateral angrenzend an die passive Leiterbahnstruktur (7) befindet und entlang des Randbereiches der ersten Spule verläuft und durch die passive Leiterbahnstruktur (7) von der ersten Spule elektrisch isoliert ist.

17. Verfahren nach Anspruch 16, wobei zwischen zwei übereinandergestapelten Schichten jeweils einen Isolationsschicht (9) angeordnet wird und Planarspulen (1-6) übereinanderliegender Schichten mit einem elektrisch leitfähigen Stift (19), der die jeweilige Isolationsschicht (9) durchdringt, miteinander verbunden werden.

## Claims

1. A coil system comprising a first coil with a plurality of stacked planar coils (1-6),
• wherein in each case two planar coils (1-6) lying directly above one another are stacked vertically with a lateral offset such that at least in sections in each case one turn of a first planar coil (1) and two turns of a second planar coil (2) arranged directly above the first planar coil are arranged in partial overlap,
• wherein the coil system comprises a passive conductor track structure (7) which is galvanically separated from all current-carrying planar coils (1-6) of the coil system and has a plurality of conductor tracks (23) that are stacked on top of one another and form a first comb-like structure,
• wherein the first comb-like structure engages at at least one edge region of the first coil in a second comb-like structure that is formed by the lateral offset of the outer turns of the planar coils (1-6) lying above one another,
**characterised in that** the lateral insulation distance (15) of the outer turn of each planar coil (1-6) from the passive conductor track structure (7) is dimensioned such that it effects a basic insulation of the first coil with respect to the passive conductor track structure (7), and wherein the coil system comprises a cooling channel (13) for a liquid cooling medium, which is located laterally adjoining the passive conductor track structure (7) and extends along the edge region of the first coil and is electrically base-insulated from the first coil via the lateral insulation distance (15) between the passive conductor track structure (7) and the outer turns of the planar coils (1-6).

2. The coil system according to claim 1, wherein the two comb-like structures are arranged relative to one another such that the lateral insulation distance (15) between the passive conductor track structure (7) and the outer turns of the first coil is at no point less than 6 times the vertical distance between the planar coils (1-6) lying directly above one another.

3. The coil system according to claim 1 or 2, wherein a side of the passive conductor track structure (7) facing away from the outer turns of the first coil forms a side wall of the cooling channel (13).

4. The coil system according to claim 3, wherein the surface of the cooling channel (13) facing the liquid cooling medium is copper-plated, wherein the copper-plated surface of the cooling channel (13) is galvanically connected to the plurality of conductor tracks of the passive conductor track structure (7) stacked on top of one another.

5. The coil system according to any one of the preceding claims, wherein the plurality of stacked planar coils (1-6) is penetrated by an iron core (18).

6. The coil system according to claim 5, wherein the iron core (18) consists of an SMC material.

7. The coil system according to any one of the preceding claims, wherein a prepreg layer (9) is arranged between two planar coils (1-6) lying directly above one another in each case.

8. The coil system according to any one of the preceding claims, each with a prepreg cover layer (25, 26) on an upper and a lower side of the stack of stacked planar coils (1-6), which effect a basic insulation of the coil system.

9. The coil system according to any one of the preceding claims, wherein the coil system is designed as a multi-layer board (11, 12, 22) and wherein the planar coils (1-6) and the conductor tracks of the passive conductor track structure (7) of each layer are arranged on a common single board of the multi-layer board (11, 12, 22).

10. The coil system according to any one of claims 1 to 8, wherein the planar coils (1-6) and the conductor tracks of the passive conductor track structure (7) of multiple layers are produced from the same metal sheet, in particular a copper sheet, by means of a separation method, and wherein an insulating layer (9) is arranged between two planar coils (1-6) lying directly above one another in each case.

11. The coil system according to claim 10, wherein the planar coils (1-6) and the conductor tracks of the passive conductor track structure (7) of each layer are punched out of the metal sheet.

12. The coil system according to claim 10 or 11, wherein the planar coils (1-6) and the conductor tracks of the passive conductor track structure (7) of four layers lying above one another have the same sheet metal cut (20), wherein said sheet metal cut (20) within the four layers lying above one another is arranged
• in a second layer as a mirrored sheet metal cut (20) of the first layer,
• in a third layer as a sheet metal cut (20) of the first layer rotated through 180°, and
• in a fourth layer as a sheet metal cut (20) of the first layer mirrored and rotated through 180°.

13. The coil system according to any one of claims 10 to 12, wherein the planar coils (1-6) stacked directly on top of one another are electrically connected by pins (19) made of electrically conductive material, which pass through the insulating layers (9) present between the planar coils (1-6).

14. The coil system according to any one of the preceding claims, with a second coil arranged laterally offset from the first coil and also comprises planar coils (1-6) stacked on top of one another and laterally offset from one another, wherein outer turns of the first coil and outer turns of the second coil engage with one another in a comb-like manner.

15. An electric motor with a primary part (28) comprising a coil system according to any one of the preceding claims and a secondary part (29) spaced apart from the primary part (28) by an air gap (31).

16. A method for producing a coil system having the following method steps:
• producing individual layers, each with
∘ a planar coil (1-6) and
∘ a passive conductor track laterally offset in the respective layer relative to an outer turn of the respective planar coil (1-6), which is electrically insulated from the respective planar coil (1-6) by a lateral insulation distance (15),
• stacking the individual layers on top of one another to form a stack in such a way that
∘ in each case two planar coils (1-6) lying directly above one another are stacked vertically with a lateral offset such that at least in sections in each case one turn of a first planar coil (1) and two turns of a second planar coil (2) arranged directly above the first planar coil (1) are arranged in partial overlap,
∘ and the passive conductor tracks lying above one another form a first comb-like structure, wherein the first comb-like structure engages at at least one edge region of the first coil in a second comb-like structure that is formed by the lateral offset of the outer turns of the planar coils (1-6) lying above one another,
**characterised in that** the lateral distance of the outer turn of each planar coil (1-6) from the passive conductor track structure (7) is dimensioned such that it effects a basic insulation of the first coil with respect to the passive conductor track structure (7), and wherein a cooling channel (13) for a liquid cooling medium is milled into the stack, which is located laterally adjoining the passive conductor track structure (7) and extends along the edge region of the first coil and is electrically insulated from the first coil via the passive conductor track structure (7).

17. The method according to claim 16, wherein an insulating layer (9) is arranged between two layers stacked above one another in each case and planar coils (1-6) of layers lying above one another are connected to one another by means of an electrically conductive pin (19) which passes through the respective insulating layer (9).

## Revendications

1. Système de bobines comprenant une première bobine comportant une pluralité de bobines planes (1-6) empilées les unes sur les autres,
• dans lequel respectivement deux bobines planes (1-6) situées directement l'une au-dessus de l'autre sont empilées verticalement l'une sur l'autre avec un décalage latéral, de telle sorte qu'au moins dans certaines sections, respectivement une spire d'une première bobine plane (1) et deux spires d'une seconde bobine plane (2), agencée directement au-dessus de la première bobine plane, sont agencées en chevauchement partiel,
• le système de bobines comprenant une structure de pistes conductrices passives (7) qui est séparée galvaniquement de toutes les bobines planes (1-6) conductrices du système de bobines, structure qui présente une pluralité de pistes conductrices (23) empilées les unes sur les autres formant une première structure en forme de peigne,
• la première structure en forme de peigne venant en prise, avec au moins une région de bordure de la première bobine, dans une seconde structure en forme de peigne qui est créée par le décalage latéral des spires extérieures des bobines planes (1-6) situées l'une au-dessus de l'autre,
**caractérisé en ce que** la distance d'isolation latérale (15) de la spire extérieure de chaque bobine plane (1-6) par rapport à la structure de pistes conductrices passives (7) est dimensionnée de telle sorte qu'elle réalise une isolation principale de la première bobine par rapport à la structure de pistes conductrices passives (7), et le système de bobines comprenant un canal de refroidissement (13) pour un milieu de refroidissement liquide, qui est situé latéralement à côté de la structure de pistes conductrices passives (7) et qui s'étend le long de la région de bordure de la première bobine et qui présente une isolation électrique principale par rapport à la première bobine par l'intermédiaire de la distance d'isolation latérale (15) entre la structure de pistes conductrices passives (7) et les spires extérieures des bobines planes (1-6).

2. Système de bobines selon la revendication 1, dans lequel les deux structures en forme de peigne sont agencées l'une par rapport à l'autre de telle sorte que la distance d'isolation latérale (15) entre la structure de pistes conductrices passives (7) et les spires extérieures de la première bobine ne soit en aucun point inférieure à 6 fois la distance verticale des bobines planes (1-6) situées directement l'une au dessus de l'autre.

3. Système de bobines selon la revendication 1 ou 2, dans lequel un côté de la structure de pistes conductrices passives (7) opposé aux spires extérieures de la première bobine représente une paroi latérale du canal de refroidissement (13).

4. Système de bobines selon la revendication 3, dans lequel la surface du canal de refroidissement (13) tournée vers le milieu de refroidissement liquide est cuivrée, la surface cuivrée du canal de refroidissement (13) étant connectée galvaniquement à la pluralité de pistes conductrices empilées les unes sur les autres de la structure de pistes conductrices passives (7).

5. Système de bobines selon l'une quelconque des revendications précédentes, la pluralité de bobines planes (1-6) empilées les unes sur les autres étant traversée par un noyau de fer (18).

6. Système de bobines selon la revendication 5, le noyau de fer (18) étant constitué d'un matériau SMC.

7. Système de bobines selon l'une quelconque des revendications précédentes, une couche de préimprégné (9) étant agencée entre respectivement deux bobines planes (1-6) situées directement l'une au-dessus de l'autre.

8. Système de bobines selon l'une quelconque des revendications précédentes, comportant respectivement une couche de recouvrement (25, 26) en préimprégné sur un côté supérieur et sur un côté inférieur de l'empilement de bobines planes (1-6) empilées les unes sur les autres, qui effectuent une isolation principale du système de bobines.

9. Système de bobines selon l'une quelconque des revendications précédentes, le système de bobines étant conçu comme une carte multicouche (11, 12, 22) et les bobines planes (1-6) et les pistes conductrices de la structure de pistes conductrices passives (7) de chaque couche étant agencées sur une carte individuelle commune de la carte multicouche (11, 12, 22).

10. Système de bobines selon l'une quelconque des revendications 1 à 8, les bobines planes (1-6) et les pistes conductrices de la structure de pistes conductrices passives (7) de plusieurs couches étant fabriquées à partir de la même tôle, en particulier une tôle de cuivre, par un procédé de séparation et une couche isolante (9) étant agencée entre respectivement deux bobines planes (1-6) situées directement l'une sur l'autre.

11. Système de bobines selon la revendication 10, les bobines planes (1-6) et les pistes conductrices de la structure de pistes conductrices passives (7) de chaque couche étant embouties à partir de la tôle.

12. Système de bobines selon la revendication 10 ou 11, les bobines planes (1-6) et les pistes conductrices de la structure de pistes conductrices passives (7) de quatre couches situées l'une sur l'autre présentant la même découpe de tôle (20), ladite découpe de tôle (20) étant agencée à l'intérieur des quatre couches situées l'une sur l'autre
• dans une deuxième couche sous forme de découpe de tôle (20) en miroir de la première couche,
• dans une troisième couche sous forme d'une découpe de tôle (20) de la première couche tournée de 180 ° et
• dans une quatrième couche sous forme d'une découpe de tôle (20) en miroir et tournée à 180 ° de la première couche.

13. Système de bobines selon l'une quelconque des revendications 10 à 12, les bobines planes (1-6) empilées directement les unes sur les autres étant connectées électriquement par des broches (19) en matériau électriquement conducteur qui pénètrent dans les couches isolantes (9) présentes entre les bobines planes (1-6).

14. Système de bobines selon l'une quelconque des revendications précédentes, comportant une seconde bobine qui est agencée latéralement décalée par rapport à la première bobine et qui comprend également des bobines planes (1-6) qui sont empilées les unes sur les autres et décalées latéralement les unes par rapport aux autres, les spires extérieures de la première bobine et les spires extérieures de la seconde bobine s'imbriquant à la manière d'un peigne.

15. Moteur électrique comportant une partie primaire (28) comprenant un système de bobines selon l'une quelconque des revendications précédentes et une partie secondaire (29) espacée de la partie primaire (28) par un entrefer (31).

16. Procédé de fabrication d'un système de bobines comportant les étapes suivantes :
• la fabrication de couches individuelles comportant respectivement
∘ une bobine plane (1-6) et
∘ une piste conductrice passive décalée latéralement dans la couche respective vers une spire extérieure de la bobine plane (1-6) respective, qui est isolée électriquement de la bobine plane (1-6) respective par une distance d'isolation latérale (15),
• l'empilage des couches individuelles les unes sur les autres pour former une pile telle que,
∘ respectivement, deux bobines planes (1-6) situées directement l'une sur l'autre soient empilées verticalement l'une au-dessus l'autre avec un décalage latéral, de telle sorte qu'au moins dans certaines sections, respectivement une spire d'une première bobine plane (1) et deux spires d'une seconde bobine plane (2) agencée directement au-dessus de la première bobine plane (1) sont agencées en chevauchement partiel,
∘ et les pistes conductrices passives situées l'une au-dessus de l'autre forment une première structure en forme de peigne, la première structure en forme de peigne venant en prise au moins avec une région de bordure de la première bobine dans une seconde structure en forme de peigne qui est créée par le décalage latéral des spires extérieures des bobines planes (1-6) situées l'une au-dessus de l'autre,
**caractérisé en ce que** la distance latérale de la spire extérieure de chaque bobine plane (1-6) par rapport à la structure de pistes conductrices passives (7) est dimensionnée de telle sorte qu'elle réalise une isolation principale de la première bobine par rapport à la structure de pistes conductrices passives (7), et un canal de refroidissement (13) pour un milieu de refroidissement liquide étant fraisé dans la pile, lequel canal de refroidissement étant situé latéralement à côté de la structure de pistes conductrices passives (7) et s'étendant le long de la zone de bordure de la première bobine et étant isolé électriquement de la première bobine par la structure de pistes conductrices passives (7).

17. Procédé selon la revendication 16, une couche isolante (9) étant respectivement agencée entre deux couches superposée l'une sur l'autre et les bobines planes (1-6) des couches situées l'une au-dessus de l'autre étant connectées entre elles par une broche (19) électriquement conductrice qui pénètre dans la couche isolante (9) respective.
